# FASCICULE DE BREVET EUROPEEN

(11) **EP 3 002 215 B1**
(45) Date de publication et mention de la délivrance du brevet: **22.03.2017**
(21) Numéro de dépôt: 15188024.2
(22) Date de dépôt: 01.10.2015
(51) Int. Cl.: B64C 25/40, B64C 25/42

(54) **ATTERRISSEUR D'AÉRONEF**
FAHRWERK EINES LUFTFAHRZEUGS
AN AIRCRAFT UNDERCARRIAGE

(30) Priorité: 03.10.2014 FR 1459503
(43) Date de publication de la demande: 06.04.2016
(73) Titulaire: Safran Landing Systems, 78140 Vélizy-Villacoublay (FR)
(72) Inventeur: DAFFOS, Mathieu, 78140 Vélizy-Villacoublay (FR)
(74) Mandataire: Lavialle, Bruno François Stéphane

(56) Documents cités:
- EP-A1- 2 460 723
- WO-A2-2011/030365
- WO-A2-2012/098198

## Description

L'invention concerne le domaine des systèmes d'entraînement en rotation au sol des roues, tel que décrit dans le document WO2012/098198.

### ARRIERE PLAN DE L'INVENTION

Pour réduire la consommation de carburant, les émissions de carbone et les nuisances sonores, les fabricants d'aéronefs tentent de développer des systèmes électriques d'entraînement en rotation des roues d'aéronef et d'intégrer ces systèmes à des aéronefs existants. Les systèmes électriques d'entraînement étudiés comportent classiquement un moteur électrique associé à au moins une roue d'un atterrisseur et des moyens d'accouplement destinés à sélectivement accoupler et désaccoupler un arbre de sortie du moteur et la jante de la roue associée. L'arbre et la jante sont accouplés lors des phases de roulage au sol, et désaccouplés lors des phases de décollage, d'atterrissage et lorsque l'aéronef est en vol.

La conception d'un tel système d'entraînement doit répondre à de nombreuses contraintes et surmonter de multiples difficultés techniques majeures, dont certaines sont brièvement présentées ci-après.

L'augmentation de masse résultant de l'installation du système d'entraînement doit être aussi réduite que possible, pour que cette augmentation de masse ne supprime pas les bénéfices obtenus en termes de réduction de carburant.

Pour limiter la masse du système d'entraînement, on cherche notamment à simplifier au maximum les moyens d'accouplement. On a ainsi étudié puis écarté des architectures de système d'entraînement dans lesquelles les moyens d'accouplement comprennent des bielles tangentielles actionnées par déphasage de deux couronnes via un mécanisme complexe.

On cherche de plus à limiter autant que possible le nombre et la masse des pièces du système d'entraînement liées de façon permanente à la jante de la roue, qui subissent les mêmes contraintes mécaniques que la roue (vitesse, accélération, chocs, vibrations). L'utilisation de telles pièces présente un impact important dans l'évaluation de la sûreté de fonctionnement de l'atterrisseur et de l'aéronef.

On cherche aussi bien sûr à limiter au maximum les contraintes mécaniques subies sur l'atterrisseur par les pièces du système d'entraînement, pour ne pas réduire la durée de vie de ces pièces.

On tente aussi de concevoir un système d'entraînement peu encombrant, car l'espace disponible sur un atterrisseur entre la jambe de l'atterrisseur et la roue est peu important, notamment à cause de la présence du porte-actionneur du frein de la roue dans le cas d'une roue freinée.

Il convient par ailleurs de développer un système d'entraînement adapté à être installé sur un atterrisseur existant sans que cette installation ne nécessite de modifier structurellement l'atterrisseur, et sans que cette installation ne nécessite d'effectuer des modifications importantes sur les roues et les freins existants. De telles modifications sont en effet particulièrement pénalisantes pour les fabricants d'aéronefs, car elles impliquent de nouveaux développements et la mise en oeuvre de nouvelles activités de certification de l'atterrisseur, des roues et des freins. Les coûts associés à ces nouvelles activités peuvent diminuer nettement l'attractivité pour les compagnies aériennes d'un tel système d'entraînement.

### OBJET DE L'INVENTION

L'invention a pour objet un système électrique d'entraînement en rotation d'une roue d'aéronef qui présente une masse et un encombrement réduits, qui comporte un nombre limité de pièces liées en permanence à la jante de la roue, qui soit installé sur l'atterrisseur de manière à subir le moins possible de contraintes mécaniques, et qui soit relativement simple à intégrer sur un atterrisseur existant.

### RESUME DE L'INVENTION

En vue de la réalisation de ce but, on propose un atterrisseur d'aéronef comportant au moins :
- une roue montée sur un essieu pour tourner autour d'un axe de rotation X ;
- un frein comportant un tube de torsion s'étendant autour de l'essieu, des organes de friction montés autour du tube de torsion et qui s'étendent entre le tube de torsion et la roue, et au moins un actionneur de freinage destiné à exercer sélectivement un effort de freinage sur les organes de friction ;
- des moyens d'entraînement en rotation de la roue comprenant un moteur électrique qui est relié à une jante de la roue par un organe d'accouplement.

Selon l'invention, l'organe d'accouplement s'étend au moins en partie autour de l'essieu entre l'essieu et le tube de torsion du frein.

Du fait de son intégration autour de l'essieu dont le diamètre est relativement réduit, l'organe d'accouplement présente un encombrement et une masse nettement réduits par rapport par exemple à un organe d'accouplement utilisé pour mettre en oeuvre une solution d'engrènement sur une circonférence d'une face latérale d'une jante de la roue.

Les seules pièces liées en permanence à la jante de la roue sont des pièces qui permettent de solidariser en rotation l'organe d'accouplement et une partie de la jante qui s'étend en regard de l'essieu. Ces pièces présentent une masse réduite et sont en nombre limité du fait, une fois encore, de la position de l'organe d'accouplement.

Comme l'organe d'accouplement s'étend au moins en partie entre l'essieu et le tube de torsion du frein, il subit l'effet de déformées d'une jante de la roue et de l'essieu (ovalisation sous charge, déformations en virage, etc.) relativement faibles par rapport, par exemple, à l'effet de déformées au niveau d'une circonférence d'une face latérale de la jante.

Enfin, l'intégration de l'organe d'accouplement ne nécessite aucune modification importante de l'atterrisseur, de la roue et du frein, car l'organe d'accouplement est positionné dans un espace disponible entre l'essieu et le tube de torsion. On note que, grâce à cette position, l'organe d'accouplement n'impacte que très peu le flux d'air généré par un dispositif de refroidissement du frein et donc le temps de refroidissement des organes de friction du frein, ce qui, à nouveau, facilite l'intégration de l'organe d'accouplement sur l'atterrisseur.

### BREVE DESCRIPTION DES DESSINS

L'invention sera mieux comprise à la lumière de la description qui suit en référence aux figures des dessins annexés parmi lesquelles :
- la figure 1 est une vue en perspective d'un atterrisseur de l'invention ;
- la figure 2 est une vue en coupe d'une partie supérieure d'un organe d'accouplement qui s'étend entre un essieu et un tube de torsion d'un frein de l'atterrisseur de l'invention selon un premier mode de réalisation ;
- la figure 3 est une vue analogue à la figure 2 pour un second mode de réalisation de l'atterrisseur de l'invention ;
- la figure 4 est une vue analogue à la figure 2 pour un troisième mode de réalisation de l'atterrisseur de l'invention.

### DESCRIPTION DETAILLEE DE L'INVENTION

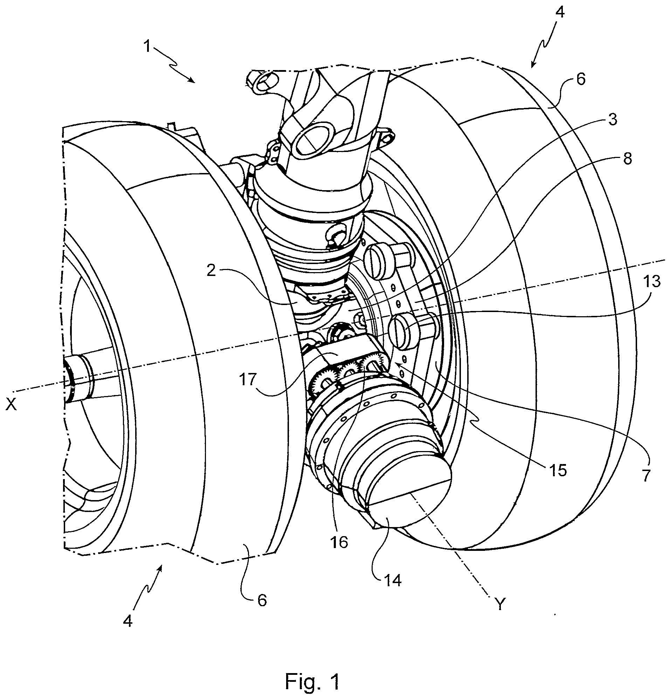

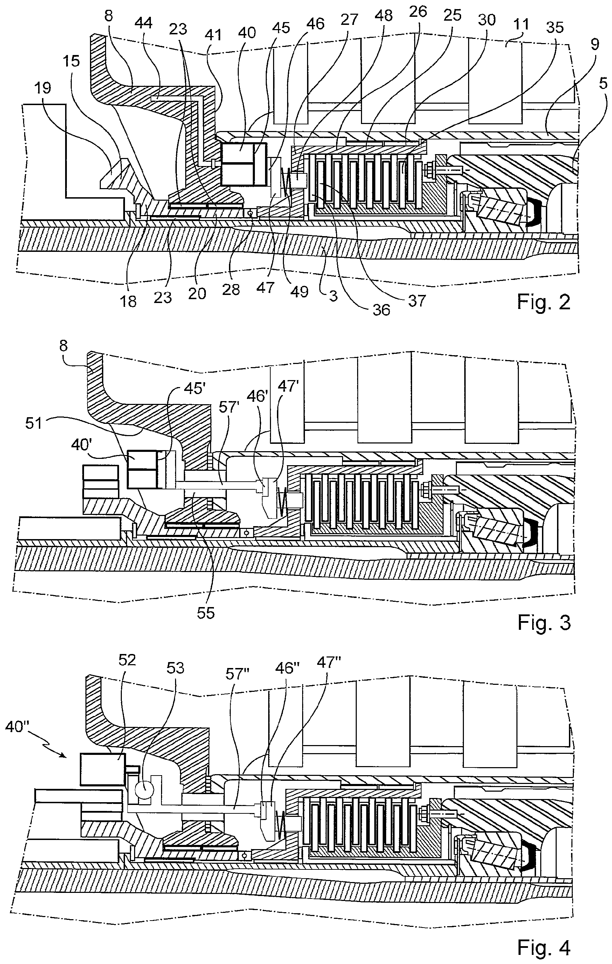

En référence aux figures 1 et 2, l'atterrisseur 1 de l'invention selon un premier mode de réalisation comporte ici de manière classique un caisson articulé à la structure d'un aéronef dans lequel une tige coulissante 2 est montée à coulissement télescopique. La tige coulissante 2, représentée ici en position entièrement rétractée, porte à son extrémité un essieu 3 sur lequel sont montées deux roues 4.

Chaque roue 4 comporte une jante 5 qui porte un pneumatique 6 et qui est montée pour tourner sur l'essieu 3 au moyen de roulements autour d'un axe X. Chaque roue 4 est en outre équipée d'un frein 7 adapté à freiner la roue 4.

Le frein 7 comporte un support comprenant un porte-actionneur 8 et un tube de torsion 9 s'étendant autour de l'essieu 3. Le frein 7 comporte de plus des organes de friction 11 montés autour du tube de torsion 9 et qui s'étendent entre le tube de torsion 9 et la roue 4, en l'occurrence une pile de disques de carbone 11. Le frein 7 comporte en outre au moins un actionneur de freinage 13, en l'occurrence une pluralité d'actionneurs de freinage 13 destinés à exercer sélectivement un effort de freinage sur la pile de disques 11 pour ralentir la rotation de la roue 4 et freiner l'aéronef.

L'atterrisseur 1 est de plus équipé de moyens d'entraînement en rotation des deux roues 4, destinés à entraîner en rotation les deux roues 4 lorsque l'aéronef est au sol.

Sur l'atterrisseur 1, les moyens d'entraînement en rotation comportent un unique moteur électrique 14 associé aux deux roues 4, et deux organes d'accouplement 15 qui chacun permettent de relier un arbre de sortie du moteur électrique à une jante 5 d'une roue 4.

Le moteur électrique 14 est positionné au bas de l'atterrisseur 1 au niveau d'une partie centrale de l'essieu 3. L'arbre de sortie du moteur électrique 14 tourne autour d'un axe orthogonal Y à l'axe X.

L'organe d'accouplement 15 de chaque roue 4 comporte des engrenages 16 formant un premier étage de réduction et un deuxième étage de réduction, lesdits engrenages 16 étant formés de pignons placés à l'intérieur d'un boîtier de réduction unique 17 positionné au bas de l'atterrisseur 1 à proximité du moteur électrique 14. Les pignons tournent eux aussi autour d'un axe orthogonal à l'axe X.

L'organe d'accouplement 15 comporte de plus un arbre d'entraînement 18 comprenant une portion dentée 19 et une partie tubulaire 20 qui s'étend au moins en partie, ici entièrement, autour de l'essieu 3 entre l'essieu 3 et le porte-actionneur 8. La portion dentée 19 constitue une partie d'un engrenage à renvoi d'angle à 90°, ledit engrenage à renvoi d'angle formant un troisième étage de réduction.

Le premier étage de réduction, le deuxième étage de réduction et le troisième étage de réduction sont destinés à modifier un couple moteur produit par le moteur électrique 14 de manière à générer un couple d'entraînement adapté à entraîner chaque roue 4 en rotation, et à transmettre ce couple d'entraînement perpendiculairement à l'axe Y de l'arbre de sortie du moteur électrique 14.

La partie tubulaire 20 de l'arbre d'entraînement 18 est séparée de l'essieu 3 d'une part et du porte-actionneur 8 d'autre part par des paliers 23 autorisant la rotation de l'arbre d'entraînement 18 par rapport à l'essieu 3 et par rapport au porte-actionneur 8.

L'organe d'accouplement 15 comporte en outre un corps d'entraînement 25 comprenant une portion cylindrique 26 qui s'étend autour de l'essieu 3 et une base 27 perpendiculaire à l'essieu 3. Le corps d'entraînement 25 est solidarisé en rotation à l'arbre d'entraînement 18 grâce à un crabot passif 28 qui facilite le démontage de l'organe d'accouplement 15.

La portion cylindrique 26 du corps d'entraînement 25 est séparée du tube de torsion 9 par des paliers 30 autorisant la rotation de la portion cylindrique 26 par rapport au tube de torsion 9.

La transmission du couple d'entraînement est réalisée via l'organe d'accouplement 15 qui s'étend entre l'essieu 3 et le porte-actionneur 8 puis entre l'essieu 3 et le tube de torsion 9. L'organe d'accouplement 15 subit ainsi l'effet de déformées de la jante 5 (ovalisation sous charge, déformations en virage, etc.) et de l'essieu 3 relativement faibles par rapport, par exemple, à l'effet de déformées au niveau d'une circonférence d'une face latérale de la jante 5.

On note ici que contrairement à une solution d'engrènement sur la circonférence de la face latérale de la jante 5, une lubrification des engrenages 16 constituant le premier étage de réduction, le deuxième étage de réduction et le troisième étage de réduction est facilitée par le diamètre réduit de ces engrenages 16. Ce diamètre réduit permet aussi de positionner le premier étage de réduction et le deuxième étage de réduction dans le boîtier de réduction 17 qui protège ces étages de réduction des agressions physiques et chimiques associées à l'environnement de l'atterrisseur 1.

L'organe d'accouplement 15 comporte enfin un organe d'embrayage 35 pour solidariser sélectivement la portion cylindrique 26 du corps d'entraînement 25 à la jante 5 de la roue 4, et donc l'arbre de sortie du moteur électrique 14 à la jante 5 de la roue 4.

L'organe d'embrayage 35 comporte des disques d'embrayage comprenant une pluralité de premiers disques d'embrayage 36 solidaires en rotation du corps d'entraînement 25 de l'organe de couplage 15 et une pluralité de deuxièmes disques d'embrayage 37 solidaires en rotation de la jante 5 de la roue 4. Les premiers disques d'embrayage 36 et les deuxièmes disques d'embrayage 37 forment un embrayage multidisque à sec.

L'organe d'embrayage 35 est actionné par un actionneur d'embrayage 40 porté par le porte-actionneur 8 du frein 7. L'actionneur d'embrayage 40 est monté sur une face interne 41 du porte-actionneur 8. Par face interne, on entend ici une face du porte-actionneur 8 qui s'étend en regard de la pile de disques de carbone 11 et du tube de torsion 9. L'actionneur d'embrayage 40 est positionné sur cette face interne 41 entre le tube de torsion 9 et l'essieu 3.

L'actionneur d'embrayage 40 est un actionneur hydraulique alimenté par un conduit d'alimentation 44 cheminant en partie sur le porte-actionneur 8.

L'actionneur hydraulique 40 comporte un piston 45 coopérant avec une butée axiale de rotation 46 (ici une butée axiale à aiguilles) positionnée sur une interface de presse 47 comportant un poussoir 48 qui s'étend au travers de la base 27 du corps d'entraînement 25.

Lorsqu'il convient de solidariser la portion cylindrique 26 du corps d'entraînement 25 à la jante 5 de la roue 4, l'actionneur hydraulique 40 est alimenté et le piston 45 pousse la butée axiale de rotation 46 contre l'interface de presse 47. Le poussoir 48 de l'interface de presse 47 exerce alors un effort axial sur l'un des premiers disques d'embrayage 36. Cet effort de friction solidarise en rotation les premiers disques d'embrayage 36 et les deuxièmes disques d'embrayage 37 et donc le corps d'entraînement 25 et la jante 5 de la roue 4. Le couple d'entraînement issu du couple moteur est ainsi transmis à la roue 4 qui est entraînée en rotation.

Lorsqu'il convient de désolidariser la portion cylindrique 26 du corps d'entraînement 25 de la jante 5 de la roue 4, l'actionneur hydraulique 40 n'est plus alimenté. Un ressort de rappel 49, positionné ici entre l'interface de presse 47 et la base 27 du corps d'entraînement 25, rappelle l'interface de presse 47 et le piston 45 dans une position rétractée dans laquelle aucun effort axial n'est exercé sur les premiers disques d'embrayage 36.

On note que la portion cylindrique 26 du corps d'entraînement 25 et la jante 5 de la roue 4 sont désolidarisées par défaut (technologie de type « fail-safe »): si l'actionneur d'embrayage 40 n'est pas alimenté, la désolidarisation est effectuée automatiquement. En l'absence d'un effort appliqué axialement sur les premiers disques d'embrayage 36 et les deuxièmes disques d'embrayage 37, une solidarisation accidentelle du corps d'entraînement 25 et la jante 5 de la roue 4 est impossible, même sous déformation de la jante 5 et de l'essieu 3.

Ainsi, en cas de disfonctionnement impactant le moteur électrique 14, l'organe d'accouplement 15 ou l'actionneur d'embrayage 40, l'entraînement en rotation de la roue 4 n'est plus assuré mais la rotation de la roue 4 n'est pas empêchée par un effort de friction exercé accidentellement.

Le couple de matériaux utilisé pour réaliser les premiers disques d'embrayage 36 et les deuxièmes disques d'embrayage 37 permet de conférer aux premiers disques d'embrayage 36 et aux deuxièmes disques d'embrayage 37 un coefficient de friction élevé. Le couple de matériaux est de préférence un couple carbone/acier ou carbone/carbone ou acier/acier. Plus le coefficient de friction est élevé, plus l'effort de friction axial nécessaire pour solidariser les premiers disques d'embrayage 36 et les deuxièmes disques d'embrayage 37 sera faible pour un couple d'entraînement donné à transmettre à la roue 5. Autrement dit, plus le coefficient de friction et/ou l'effort de friction axial est important, pour un même nombre de premiers disques d'embrayage 36 et de deuxièmes disques d'embrayage 37, plus le couple d'entraînement transmissible est important.

L'utilisation de cet organe d'embrayage 35 multidisque ne requiert pas une synchronisation fine entre la vitesse de rotation de l'arbre de sortie du moteur électrique 14 et la vitesse de rotation de la roue 4 avant leur solidarisation. Il n'est donc pas nécessaire de mesurer très précisément la vitesse de rotation de la roue 4.

Le pilotage de l'organe d'embrayage 35 consiste à synchroniser grossièrement la vitesse de rotation de l'arbre de sortie du moteur électrique 14 et la vitesse de rotation de la roue 4, à embrayer sans couple, puis à transmettre le couple d'entraînement à la roue 4. L'organe d'embrayage 35 est ainsi très peu utilisé en glissement, ce qui limite l'usure des premiers disques d'embrayage 36 et des deuxièmes disques d'embrayage 37, qui peuvent donc être relativement fins et légers. L'échauffement de l'organe d'embrayage 35 est peu important car limité à la phase de synchronisation.

On remarque que, contrairement à une solution d'engrènement sur la circonférence de la face latérale de la jante, l'organe d'accouplement 15, l'actionneur d'embrayage 40 et l'organe d'embrayage 35 sont ici protégés des agressions physiques et chimiques associées à l'environnement de l'atterrisseur 1. Cette protection est assurée grâce à la position de ces équipements entre l'essieu 3 et le porte-actionneur 8 ou le tube de torsion 9 et, en ce qui concerne le premier étage de réduction et le deuxième étage de réduction, grâce à leur intégration au sein du boîtier de réduction 17.

Dans un second mode de réalisation de l'atterrisseur de l'invention, visible sur la figure 3, l'actionneur d'embrayage 40' est un actionneur hydraulique 40' qui est cette fois monté non pas sur la face interne 41 du porte-actionneur mais sur une face externe 51 qui s'étend en regard de la jambe de l'atterrisseur. L'actionneur hydraulique 40' comporte un piston 45' et un patin 57' présentant une longueur suffisante pour s'étendre depuis la face externe 51 du porte-actionneur 8 jusqu'à la butée axiale de rotation 46' et l'interface de presse 47' au travers d'une ouverture 55 réalisée à cet effet dans le porte-actionneur 8.

Dans un troisième mode de réalisation de l'atterrisseur de l'invention, l'actionneur d'embrayage 40" est positionné comme dans le deuxième mode de réalisation, mais est cette fois un actionneur électromécanique 40" comportant un moteur électrique 52 et un mécanisme de rampe à bille 53. Le mécanisme de rampe à bille 53 confère au patin 57" un mouvement axial pour que l'actionneur d'embrayage 40" pousse le patin 57" contre l'interface de presse 47" par l'intermédiaire de la butée axiale de rotation 46".

L'invention n'est pas limitée aux modes de réalisation particuliers qui viennent d'être décrits, mais, bien au contraire, couvre toute variante entrant dans le cadre de l'invention tel que défini par les revendications.

Bien que l'on ait indiqué que l'organe d'embrayage comporte une pluralité de premiers disques d'embrayage et une pluralité de deuxièmes disques d'embrayage, on peut utiliser un organe d'embrayage comprenant un unique disque solidaire en rotation de l'organe d'accouplement et un unique disque solidaire en rotation de la jante de la roue.

L'organe d'embrayage peut parfaitement être un embrayage multidisque humide.

Bien que l'on ait indiqué que le troisième étage de réduction comporte un engrenage à renvoi d'angle à 90°, l'utilisation d'un autre angle est possible pour adapter l'intégration de l'organe de couplage à un agencement particulier des moyens d'entraînement sur l'atterrisseur. Tous les types d'engrenage à renvoi d'angle sont utilisables : engrenage conique, hypoïde, engrenage face, etc.

## Revendications

1. Atterrisseur d'aéronef comportant au moins :
- une roue (4) montée sur un essieu (3) pour tourner autour d'un axe de rotation X ;
- un frein (7) comportant un tube de torsion (9) s'étendant autour de l'essieu (3), des organes de friction (11) montés autour du tube de torsion (9) et qui s'étendent entre le tube de torsion (9) et la roue (4), et au moins un actionneur de freinage (13) destiné à exercer sélectivement un effort de freinage sur les organes de friction ;
- des moyens d'entraînement en rotation de la roue comprenant un moteur électrique (14) qui est relié à une jante (5) de la roue (4) par un organe d'accouplement (15),
**caractérisé en ce que** l'organe d'accouplement (15) s'étend au moins en partie autour de l'essieu (3) entre l'essieu et le tube de torsion (9) du frein.

2. Atterrisseur d'aéronef selon la revendication 1, dans lequel l'organe d'accouplement (15) comprend un organe d'embrayage (35) pour solidariser sélectivement le moteur électrique à la jante de la roue, l'organe d'embrayage s'étendant en regard du tube de torsion.

3. Atterrisseur d'aéronef selon la revendication 2, dans lequel l'organe d'embrayage comporte des disques d'embrayage comprenant au moins un premier disque d'embrayage (36) solidaire en rotation de l'organe de couplage et au moins un deuxième disque d'embrayage (37) solidaire en rotation de la jante de la roue.

4. Atterrisseur d'aéronef selon l'une des revendications 2 ou 3, dans lequel le frein comporte un porte-actionneur (8) portant l'actionneur de freinage (13), et dans lequel l'organe d'embrayage est actionné par un actionneur d'embrayage (40 ; 40' ; 40") porté par le porte-actionneur.

5. Atterrisseur selon la revendication 4, dans lequel l'actionneur d'embrayage est monté sur une face interne (41) du porte-actionneur (8) et s'étend entre l'essieu et le tube de torsion du frein.

6. Atterrisseur selon la revendication 4, dans lequel l'actionneur d'embrayage est monté sur une face externe (51) du porte-actionneur.

7. Atterrisseur d'aéronef selon l'une des revendications 4 à 6, dans lequel l'organe d'accouplement (15) comporte un arbre d'entraînement (18) comprenant une portion dentée (19) et une partie tubulaire (20) s'étendant au moins en partie autour de l'essieu entre l'essieu et le porte-actionneur.

8. Atterrisseur selon la revendication 7, dans lequel la portion dentée (19) appartient à un engrenage à renvoi d'angle.

9. Atterrisseur d'aéronef selon l'une des revendications précédentes, dans lequel l'arbre de sortie du moteur électrique (14) et l'axe de rotation (X) de la roue (4) sont orthogonaux.

## Patentansprüche

1. Luftfahrzeugfahrwerk, mindestens umfassend:
- ein Rad (4), das auf einer Radachse (3) gelagert ist, um sich um eine Rotationsachse X zu drehen;
- eine Bremse (7), die ein Torsionsrohr (9) umfasst, das sich um die Radachse (3) herum erstreckt, Reibelemente (11), die um das Torsionsrohr (9) herum gelagert sind und sich zwischen dem Torsionsrohr (9) und dem Rad (4) erstrecken, sowie mindestens einen Bremsaktor (13), der dazu bestimmt ist, selektiv eine Bremskraft auf die Reibelemente auszuüben;
- Drehantriebsmittel zum Drehantrieb des Rades, die einen Elektromotor (14) umfassen, der über ein Verbindungselement (15) mit einer Felge (5) des Rades (4) verbunden ist,
**dadurch gekennzeichnet, dass** sich das Verbindungselement (15) zumindest teilweise um die Radachse (3) herum zwischen der Radachse und dem Torsionsrohr (9) der Bremse erstreckt.

2. Luftfahrzeugfahrwerk nach Anspruch 1, bei dem das Verbindungselement (15) ein Kupplungselement (35) umfasst, um den Elektromotor selektiv mit der Felge des Rades zu verbinden, wobei sich das Kupplungselement gegenüber dem Torsionsrohr erstreckt.

3. Luftfahrzeugfahrwerk nach Anspruch 2, bei dem das Kupplungselement Kupplungsscheiben umfasst, die mindestens eine erste Kupplungsscheibe (36) enthalten, die drehfest mit dem Kupplungselement verbunden ist, sowie mindestens eine zweite Kupplungsscheibe (37), die drehfest mit der Felge des Rades verbunden ist.

4. Luftfahrzeugfahrwerk nach einem der Ansprüche 2 oder 3, bei dem die Bremse einen Aktorträger (8) umfasst, der den Bremsaktor (13) trägt, und bei dem das Kupplungselement von einem Kupplungsaktor (40; 40'; 40") betätigt wird, der von dem Aktorträger getragen wird.

5. Fahrwerk nach Anspruch 4, bei dem der Kupplungsaktor auf einer Innenseite (41) des Aktorträgers (8) montiert ist und sich zwischen der Radachse und dem Torsionsrohr der Bremse erstreckt.

6. Fahrwerk nach Anspruch 4, bei dem der Kupplungsaktor auf einer Außenseite (51) des Aktorträgers montiert ist.

7. Luftfahrzeugfahrwerk nach einem der Ansprüche 4 bis 6, bei dem das Verbindungselement (15) eine Antriebswelle (18) umfasst, die einen gezahnten Abschnitt (19) und einen rohrförmigen Teil (20) enthält, der sich zumindest teilweise um die Radachse herum zwischen der Radachse und dem Aktorträger erstreckt.

8. Fahrwerk nach Anspruch 7, bei dem der gezahnte Abschnitt (19) zu einem Getriebe mit Winkeltrieb gehört.

9. Luftfahrzeugfahrwerk nach einem der vorhergehenden Ansprüche, bei dem die Abtriebswelle des Elektromotors (14) und die Rotationsachse (X) des Rades (4) orthogonal zueinander sind.

## Claims

1. An aircraft undercarriage comprising at least:
• a wheel (4) mounted on an axle (3) to rotate about an axis of rotation X;
• a brake (7) comprising a torsion tube (9) extending around the axle (3), friction members (11) mounted around the torsion tube (9) and extending between the torsion tube (9) and the wheel (4), and at least one brake actuator (13) for selectively exerting a braking force on the friction members; and
• drive means for driving rotation of the wheel, the drive means comprising an electric motor (14) connected to the rim (5) of the wheel (4) by a coupler member (15);
the undercarriage being **characterized in that** the coupler member (15) extends at least in part around the axle (3) between the axle and the torsion tube (9) of the brake.

2. An aircraft undercarriage according to claim 1, wherein the coupler member (15) comprises a clutch member (35) for selectively connecting together the electric motor and the rim of the wheel, the clutch member facing the torsion tube.

3. An aircraft undercarriage according to claim 2, wherein the clutch member includes clutch disks comprising at least one first clutch disk (36) constrained to rotate with the coupler member and at least second clutch disk (37) constrained to rotate with the rim of the wheel.

4. An aircraft undercarriage according to claim 2 or claim 3, wherein the brake includes an actuator carrier (8) carrying the brake actuator (13), and wherein the clutch member is actuated by a clutch actuator (40; 40'; 40") carried by the brake actuator.

5. An aircraft undercarriage according to claim 4, wherein the clutch actuator is mounted on an inside face (41) of the actuator carrier (8) and extends between the axle and the torsion tube of the brake.

6. An aircraft undercarriage according to claim 4, wherein the clutch actuator is mounted on an outside face (51) of the actuator carrier.

7. An aircraft undercarriage according to any one of claims 4 to 6, wherein the coupler member (15) includes a drive shaft (18) having a toothed portion (19) and a tubular portion (20) extending at least in part around the axle between the axle and the actuator carrier.

8. An aircraft undercarriage according to claim 7, wherein the toothed portion (19) forms part of angle take-off gearing.

9. An aircraft undercarriage according to any preceding claim, wherein the outlet shaft of the electric motor (14) and the axis of rotation (X) of the wheel (4) are mutually orthogonal.
